# EUROPÄISCHE PATENTANMELDUNG

(11) **EP 1 057 682 A1**
(43) Veröffentlichungstag der Anmeldung: **06.12.2000**
(21) Anmeldenummer: 00109479.6
(22) Anmeldetag: 04.05.2000
(51) Int. Cl.: B60K 31/04

(54) **Einstellung eines Automatikgetriebes beim Überfahren von einer Strassenkuppe in einem Fahrzeug mit Fahrgeschwindigkeitsregelsystem**

(30) Priorität: 31.05.1999 DE 19924945
(71) Anmelder: DaimlerChrysler AG, 70567 Stuttgart (DE)
(72) Erfinder: Linden, Thomas, 70327 Stuttgart (DE)

(57) **Zusammenfassung**

Bei einem Verfahren zur Einstellung eines Automatikgetriebes in einem Fahrzeug mit Geschwindigkeits-Regelsystem werden unter Berücksichtigung von Fahrzeug-Zustandsgrößen und Fahrzeug-Betriebsgrößen Stellsignale zur Einlegung einer bestimmten Getriebe-Gangstufe zur Einhaltung einer vorgegebenen Zielgeschwindigkeit erzeugt.

Um häufige Gangwechsel beim Überfahren von Straßenkuppen zu vermeiden, wird nach der Vorgabe einer Zielgeschwindigkeit überprüft, ob das Fahrzeug eine Straßenkuppe überfährt, wobei für den Fall, daß das Fahrzeug eine Straßenkuppe überschritten hat und bergab fährt, die aktuelle Getriebe-Gangstufe auf dem vor Überschreiten des Scheitelpunkts der Straßenkuppe eingestellten Wert der Getriebe-Gangstufe gehalten wird.

## Beschreibung

Die Erfindung betrifft ein Verfahren und eine Vorrichtung zur Einstellung eines Automatikgetriebes in einem Fahrzeug mit Geschwindigkeits-Regelsystem nach dem Oberbegriff des Anspruches 1 bzw. 9.

Es sind Geschwindigkeits-Regelsysteme bekannt, mit denen eine vom Fahrer vorgegebene oder über ein automatisches Ermittlungssystem errechnete Zielgeschwindigkeit in einem Kraftfahrzeug selbsttätig eingehalten werden kann. Diese Geschwindigkeits-Regelsysteme umfassen sowohl Tempomat-Funktionen, bei denen das Fahrzeug eine vom Fahrer gewählte Mindestgeschwindigkeit einhalten soll, als auch Begrenzer-Funktionen, bei denen das Fahrzeug eine vom Fahrer vorgegebene oder eine beispielsweise in Abstands-Regelungssystemen automatisch ermittelte Höchstgeschwindigkeit nicht überschreiten darf. Bei den Begrenzer-Funktionen werden in dem Geschwindigkeits-Regelsystem ausgehend von der Höchstgeschwindigkeit und den aktuellen Fahrzeugzustandsgrößen, insbesondere der aktuellen Fahrzeuggeschwindigkeit, Stellsignale erzeugt, mittels denen der Motor, das Getriebe oder die Radbremsen zur Einhaltung der Höchstgeschwindigkeit eingestellt werden.

Aus der Druckschrift DE 44 07 082 A1 ist es bekannt, zur Steuerung von Automatikgetrieben in Kraftfahrzeugen ein Getriebe-Stellsignal zu erzeugen, um das Fahrzeug aus der momentanen Geschwindigkeit auf eine gewünschte Höchstgeschwindigkeit abzubremsen, die beispielsweise dem Abstand zu einem vorausfahrenden Fahrzeug entsprechend ermittelt wird. Hierzu wird ein Gangwechsel in einen kleineren Gang erzwungen, wodurch ein höheres Übersetzungsverhältnis mit einem größeren Verzögerungsmaß erreicht wird. Der Fahrer hat bei diesem System die Möglichkeit, über die Betätigung des Beschleunigungspedals die automatische Abstands- bzw. Geschwindigkeitsregelung außer Kraft zu setzen und den Abstand zum vorausfahrenden Fahrzeug nach eigenem Wunsch einzustellen.

Aus der Druckschrift DE 195 09 492 C2 ist ein Geschwindigkeits-Regelsystem mit Begrenzerfunktion bekannt, bei dem der Fahrer eine maximal zulässige Höchstgeschwindigkeit vorgeben kann. Das Regelsystem begrenzt die Fahrzeuggeschwindigkeit selbsttätig auf die Höchstgeschwindigkeit, wenn die Betätigung des Gaspedals durch den Fahrer eine höhere Fahrzeuggeschwindigkeit als die eingestellte Höchstgeschwindigkeit ergeben würde. In diesem Fall wird unabhängig von der tatsächlichen Gaspedalstellung ein der vorgegebenen Höchstgeschwindigkeit entsprechendes Stellsignal erzeugt, das zur Einstellung des Motors und des Getriebes herangezogen wird.

Sind derartige Geschwindigkeits-Regelsysteme im Bereich von zu überfahrenden Straßenkuppen aktiv, so kommt es oftmals am Steigungsabschnitt der Kuppe aufgrund der gestiegenen, auf das Fahrzeug wirkenden Last zu Rückschaltungen im Automatikgetriebe. Beim Überfahren der Kuppe, im Übergang von Bergfahrt zu Talfahrt, sinkt die auf das Fahrzeug wirkende Last und das Getriebe wird durch Stellsignale des Regelsystems wieder in eine höhere Gangstufe geschaltet. Wegen des geringeren Bremsmomentes in der höheren Gangstufe wird das Fahrzeug in einen Schiebebetrieb überführt, in welchem das Fahrzeug aufgrund der Hangabtriebskräfte auf der Gefällstrecke über die eingestellte Zielgeschwindigkeit hinausschiebt, wodurch im Regelsystem ein Rückschaltsignal erzeugt wird. Die nach dem Überschreiten der Kuppe veranlaßte Hochschaltung wird dadurch sofort wieder zurückgenommen, was zu Irritationen des Fahrers führen kann.

Der Erfindung liegt das Problem zugrunde, Fahrsicherheit und Komfort bei Fahrzeugen mit Automatikgetrieben, die mit einer Geschwindigkeits-Regeleinheit ausgestattet sind, zu verbessern. Es sollen insbesondere häufige Gangwechsel beim Überfahren von Straßenkuppen vermieden werden.

Dieses Problem wird erfindungsgemäß mit den Merkmalen des Anspruches 1 bzw. 9 gelöst.

Gemäß der Neuerung wird zunächst abgeprüft, ob das Fahrzeug eine Straßenkuppe überfährt. Sofern dies der Fall ist und das Fahrzeug sich bereits auf Talfahrt hinter der Kuppe befindet, wird die aktuelle Getriebe-Gangstufe auf dem Wert gehalten, der im Automatikgetriebe vor dem Überschreiten der Kuppe bei der Bergfahrt eingestellt gewesen ist. Durch diese Klammerung des Ganges wird erreicht, daß nach dem Überfahren von Kuppen Hochschaltungen aufgrund fallender Last unterdrückt werden, die Kuppe wird mit nur einem, gleichbleibenden Gang durchfahren, wodurch Irritationen und Fehlreaktionen des Fahrers vermieden werden.

Zur Feststellung, ob eine Fahrt über eine Kuppe vorliegt, wird die Kuppe zweckmäßig in einen ansteigenden und einen abfallenden Abschnitt und die Fahrzeugfahrt entsprechend in eine Bergfahrt und eine Talfahrt unterteilt, wobei für jeden Abschnitt unterschiedliche Bedingungen formuliert und abgefragt werden. Eine Kuppenfahrt liegt vor, wenn die Bedingungen für Berg- und Talfahrt kumulativ vorliegen und die Talfahrt sich unmittelbar an die Bergfahrt anschließt. Die Aufteilung in Berg- und Talfahrt hat den Vorteil, daß die Bedingungen für jeden Abschnitt verhältnismäßig einfach formuliert und abgeprüft werden können.

In einer vorteilhaften Ausführung liegt eine Bergfahrt des Fahrzeugs dann vor, wenn das Fahrzeug sich in Konstantfahrt befindet, also mit konstantem Motormoment bzw. konstanter Geschwindigkeit bewegt wird, wenn weiterhin die vom Fahrer erzeugte Ist-Gaspedalstellung höher ist als eine vom Regelsystem erzeugte und mit der vorgegebenen Zielgeschwindigkeit korrelierende Gaspedal-Ersatzgröße und wenn außerdem der Reglerausgang des Regelsystems einen ersten Schwellenwert überschreitet. Damit vom Regelsystem eine Bergfahrt erkannt wird, müssen zweckmäßig für den Fall, daß im Regelsystem eine Begrenzerfunktion mit vorgegebener Höchstgeschwindigkeit aktiviert ist, alle genannten Bedingungen kumulativ vorliegen. Sobald vom Regelsystem eine Bergfahrt erkannt wurde, wird die aktuell eingelegte Getriebe-Gangstufe gespeichert, die für eine Klammerung des Ganges bei einer eventuell folgenden Talfahrt herangezogen wird.

Es kann aber auch gemäß einer alternativen Ausführung vorteilhaft sein, als Bedingungen für Bergfahrt nur die Konstantfahrt und den Reglerausgang zu überprüfen.

Der Schwellenwert, welcher dem Vergleich mit dem Reglerausgang zugrunde gelegt wird, wird bevorzugt in Abhängigkeit der Getriebe-Gangstufe und der vorgegebenen Zielgeschwindigkeit ermittelt.

Nachdem eine Bergfahrt erkannt worden ist, wird überprüft, ob sich an die Bergfahrt eine Talfahrt anschließt, welche insbesondere für den Fall vorliegt, daß der Reglerausgang einen zweiten Schwellenwert unterschreitet, der zweckmäßig kleiner ist als der erste, dem Vergleich für Bergfahrt zugrunde liegende Schwellenwert. Befindet sich das Fahrzeug nach der Bergfahrt auf Talfahrt, sind alle Bedingungen für eine Kuppenüberfahrung erfüllt und es erfolgt die Klammerung an diejenige Gangstufe, die bereits auf der Bergseite der Kuppe eingelegt gewesen ist. Hierzu wird im Regelsystem das Getriebe-Stellsignal auf den abgespeicherten Wert gesetzt.

Als Aufhebungsbedingung für die Klammerungsfunktion bei Kuppenfahrten kann eine Halte- bzw. Wartezeit vorgegeben werden, die mit dem Beginn der Klammerung des Ganges gestartet wird. Nach Ablauf der Haltezeit wird die Klammerungsfunktion aufgehoben und die reguläre Getriebe-Schaltlogik wird wieder aktiviert.

Als weitere Aufhebungsbedingung kann parallel zum Ablauf der Haltezeit berücksichtigt werden, ob das Fahrzeug bei der Talabfahrt in einen Schiebebetrieb übergegangen ist, bei dem die Hangabtriebskräfte das Bremsmoment übersteigen und das Fahrzeug über die eingestellte Zielgeschwindigkeit hinaus beschleunigt wird. Sofern Schiebebetrieb vorliegt, wird die Klammerungsfunktion aufgehoben, falls das Regelsystem eine sich von der aktuellen Getriebe-Gangstufe unterscheidende Ganganforderung erzeugt, beispielsweise eine Rückschaltanforderung, um die Zielgeschwindigkeit halten zu können. Eine Aufhebung der Klammerungsfunktion erfolgt auch bei Deaktivierung der Zielgeschwindigkeit und sich anschließender Hochschaltanforderung. In diesem Fall wird die Klammerung des Ganges auch bei noch nicht abgelaufener Haltezeit vorzeitig beendet.

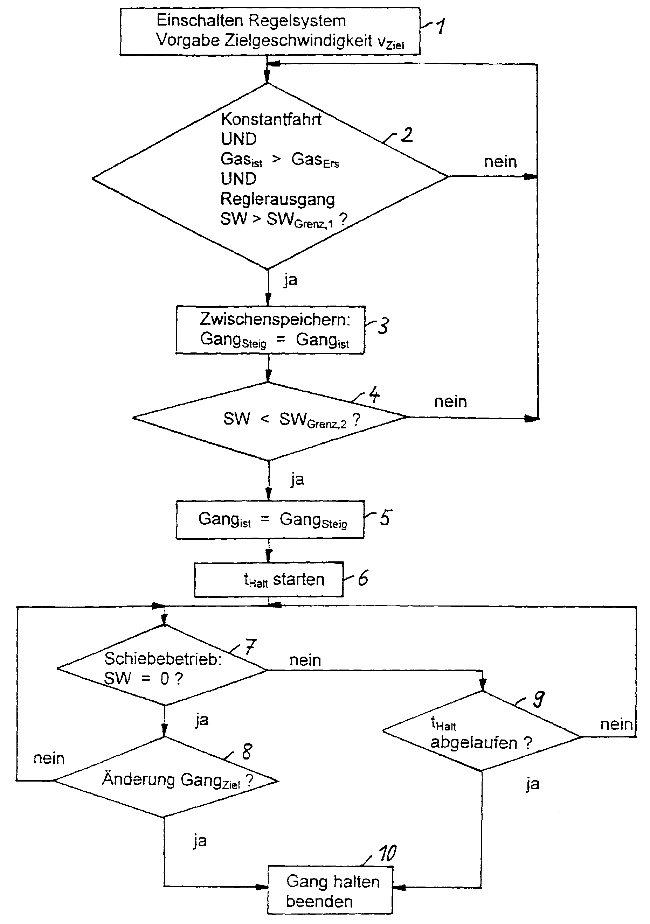

Weitere Vorteile und zweckmäßige Ausführungsformen sind den weiteren Ansprüchen, der Figurenbeschreibung und der Zeichnung zu entnehmen, die ein Ablaufdiagramm mit den Verfahrensschritten für eine Klammerung des Ganges bei Überfahren einer Straßenkuppe zeigt.

Das in der Figur dargestellte Ablaufschema ist in einem Geschwindigkeits-Regelsystem eines Kraftfahrzeugs zur Einhaltung einer vorgegebenen Geschwindigkeit v_{Ziel} realisiert, die je nach Vorgabe sowohl eine nicht zu überschreitende Obergrenze innerhalb eines Geschwindigkeits-Begrenzersystems als auch eine Tempomatfunktion darstellen kann. Die Zielgeschwindigkeit kann entweder unmittelbar vom Fahrer vorgegeben oder von einem Fahrzeugsystem unter Berücksichtigung äußerer Bedingungen und Einflüsse wie Geschwindigkeitsbeschränkungen, Sichtverhältnisse, Verkehrsdichte etc. automatisch ermittelt werden. Das Regelsystem kann das auf die Straße übertragbare Antriebsmoment sowohl über das Motormoment der Brennkraftmaschine als auch über das Automatikgetriebe zur Einhaltung der Zielgeschwindigkeit beeinflussen. Im folgenden wird eine vorteilhafte Manipulation der Gangstufen im Automatikgetriebe beschrieben.

Gemäß dem Ablaufschema wird in einem Verfahrensschritt 1 zunächst das Regelsystem unter Vorgabe einer Zielgeschwindigkeit v_{Ziel} eingeschaltet. In den folgenden Verfahrensschritten 2 und 4 wird überprüft, ob die Bedingungen für ein Überfahren einer Straßenkuppe vorliegen, wobei zunächst im Schritt 2 die Bedingungen für die Bergfahrt beim Herannahen an die Kuppe und im Schritt 4 die Bedingungen für die Talfahrt beim Entfernen von der Kuppe abgeprüft werden.

Als Bedingungen für ein Herannahen an eine Kuppe wird im Verfahrensschritt 2 abgefragt, ob das Fahrzeug sich in Konstantfahrt befindet, ob die vom Fahrer ausgeübte Ist-Gaspedalstellung Gasᵢₛₜ größer ist als eine korrespondierende Gaspedal-Ersatzgröße Gas_{Ers}, welche vom Regelsystem erzeugt wird und mit der vorgegebenen Zielgeschwindigkeit v_{Ziel} korreliert, und ob der Reglerausgang SW des Regelsystems einen zugeordneten ersten Schwellenwert SW_{Grenz,1} überschreitet, wobei bevorzugt sämtliche Bedingungen kumulativ vorliegen müssen. Konstantfahrt liegt vor, wenn das Fahrzeug sich im stationären Momentengleichgewicht befindet bzw. wenn die Fahrzeuggeschwindigkeit vᵢₛₜ konstant ist.

Die Überprüfung, ob die vom Fahrer erzeugte Ist-Gaspedalstellung Gasᵢₛₜ größer ist als die korrespondierende Gaspedal-Ersatzgröße Gas_{Ers} des Regelsystems, dient im Falle eines als Begrenzers eingesetzten Regelsystems zur Sicherstellung, daß sich das Fahrzeug im stationären Zustand befindet. Sofern eine andere Funktion im Regelsystem gewählt wird, beispielsweise eine Tempomatfunktion, kann es aber auch zweckmäßig sein, auf diese Bedingung zu verzichten.

Schließlich wird als weitere zu erfüllende Bedingung überprüft, ob der Reglerausgang SW den Grenzwert SW_{Grenz,1} überschreitet, welcher sich insbesondere in Abhängigkeit der vorgegebenen Zielgeschwindigkeit v_{Ziel} und der aktuellen Gangstufe Gangᵢₛₜ berechnet. Der Schwellenwert kann beispielsweise als Kennfeld im Regelsystem abgespeichert sein.

Sofern die genannten Bedingungen erfüllt sind, befindet sich das Fahrzeug in stationärer Bergfahrt, es wird der Ja-Verzweigung entsprechend zum folgenden Verfahrensschritt 3 fortgefahren. Andernfalls wird der Nein-Verzweigung entsprechend zu einer erneuten Überprüfung der Bedingungen zurückgekehrt.

Im Verfahrensschritt 3 wird, nach dem die Bergfahrt festgestellt worden ist, die aktuelle Getriebe-Gangstufe Gangᵢₛₜ auf einer Variablen Gang_{Steig} zwischengespeichert. Die Information über die bei Bergfahrt eingelegte Getriebe-Gangstufe Gangᵢₛₜ wird für den Fall benötigt, daß im folgenden eine sich anschließende Talfahrt des Fahrzeuges festgestellt wird.

Die Talfahrt-Bedingung wird im Verfahrensschritt 4 abgeprüft. Hierzu wird der aktuelle Reglerausgang SW des Regelsystems auf Unterschreitung eines zweiten Schwellenwertes SW_{Grenz,2} überprüft, welcher sich vom ersten Schwellenwert SW_{Grenz,1} unterscheidet, insbesondere kleiner ist als der erste Schwellenwert SW_{Grenz,1}. Auch der zweite Schwellenwert SW_{Grenz,2} bestimmt sich in Abhängigkeit der eingestellten Höchstgeschwindigkeit und der aktuellen Gangstufe. Zweckmäßig wird der zweite Schwellenwert SW_{Grenz,2} wie auch der erste Schwellenwert SW_{Grenz,1} aus einem im Regelsystem abgelegten Kennfeld ermittelt.

Ein abnehmender Reglerausgang SW ist ein Indiz für eine geringer werdende, auf das Fahrzeug wirkende Last. Unterschreitet der Reglerausgang SW den zweiten Grenzwert SW_{Grent,2}, so kann davon ausgegangen werden, daß das Fahrzeug das Maximum der Straßenkuppe überschritten hat und sich auf Talfahrt befindet. In diesem Fall sind alle Bedingungen für eine Kuppenfahrt festgestellt worden und es wird der Ja-Verzweigung entsprechend fortgefahren. Andernfalls wird gemäß der Nein-Verzweigung zum Beginn der Bedingungsüberprüfung, ob das Fahrzeug sich auf Bergfahrt befindet, zurückgekehrt.

Nach dem Feststellen der Kuppenfahrt wird im Verfahrensschritt 5 die aktuelle Getriebe-Gangstufe Gangᵢₛₜ auf die Zwischenvariable Gang_{Steig} gesetzt, welche die bei der Bergfahrt eingelegte Gangstufe repräsentiert. Diese Gangklammerung bedeutet, daß die aktuelle Getriebe-Gangstufe Gangᵢₛₜ während der Talfahrt des Fahrzeuges solange beibehalten wird, bis die nachfolgend beschriebenen Aufhebungsbedingungen für die Klammerung eintreten.

Es kann zweckmäßig sein, die abgespeicherte Zwischenvariable Gang_{Steig} als obere Gangbegrenzung vorzugeben, die von der aktuellen Getriebe-Gangstufe Gangᵢₛₜ nicht überschritten, jedoch unterschritten werden darf.

Die Klammerung des Ganges wird entsprechend Verfahrensschritt 6 für eine vorgebbare Haltezeit t_{Halt} aufrechterhalten, sofern nicht vor Ablauf der Haltezeit t_{Halt} vorzeitig eine Abbruchbedingung eintritt. Nach dem Start der Haltezeit t_{Halt} wird im Verfahrensschritt 7 überprüft, ob das Fahrzeug sich im Schiebebetrieb befindet, bei dem das Motorbremsmoment durch die Hangabtriebskräfte aufgrund der Hangneigung übertroffen wird, wodurch das Fahrzeug beschleunigt wird. Das Vorliegen des Schiebebetriebes wird an Hand des Reglerausganges SW überprüft. Ein Schiebebetrieb liegt vor, wenn der Reglerausgang SW des Regelsystems den Wert Null einnimmt. In diesem Fall wird gemäß der Ja-Verzweigung zum Verfahrensschritt 8 fortgefahren, gemäß dem die Gangklammerung solange aufrechterhalten wird, bis vom Regelsystem oder manuell vom Fahrer eine neue Ganganforderung Gang_{Ziel} vorgegeben wird (Ja-Verzweigung), welche sich von der aktuellen Getriebe-Gangstufe Gangᵢₛₜ unterscheidet. Sofern Schiebebetrieb des Fahrzeugs und neue Ganganforderung vorliegen, ist die Abbruchbedingung vor Ablauf der Haltezeit erfüllt und es wird gemäß Verfahrensschritt 10 die Klammerungsfunktion zur Beibehaltung der Gangstufe beendet. Andernfalls wird gemäß der Nein-Verzweigung im Verfahrensschritt 8 zu einer erneuten Überprüfung des Schiebebetriebes zurückgekehrt.

Falls im Verfahrensschritt 7 festgestellt wird, daß innerhalb der Wartezeit t_{Halt} kein Schiebebetrieb vorliegt, wird gemäß der Nein-Verzweigung zum Verfahrensschritt 9 fortgefahren, in welchem überprüft wird, ob der Prozeß sich noch im gestarteten Zeitintervall t_{Halt} befindet. Ist das Zeitintervall t_{Halt} noch nicht abgelaufen, wird gemäß der Nein-Verzweigung des Verfahrensschrittes 9 zum Verfahrensschritt 7 zurückgekehrt und es wird erneut überprüft, ob Schiebebetrieb vorliegt. Ist die Haltezeit t_{Halt} abgelaufen, wird im Verfahrensschritt 9 der Ja-Verzweigung gemäß zum Verfahrensschritt 10 fortgefahren, die Klammerungsfunktion ist beendet.

## Patentansprüche

1. Verfahren zur Einstellung eines Automatikgetriebes in einem Fahrzeug mit Geschwindigkeits-Regelsystem, wobei unter Berücksichtigung von Fahrzeug-Zustandsgrößen und Fahrzeug-Betriebsgrößen Stellsignale zur Einlegung einer bestimmten Getriebe-Gangstufe zur Einhaltung einer vorgegebenen Zielgeschwindigkeit (v_{Ziel}) erzeugt werden,
**dadurch gekennzeichnet,**
- daß nach der Vorgabe einer Zielgeschwindigkeit (v_{Ziel}) überprüft wird, ob das Fahrzeug eine Straßenkuppe überfährt,
- daß für den Fall, daß das Fahrzeug eine Straßenkuppe überschritten hat und bergab fährt, die aktuelle Getriebe-Gangstufe (Gangᵢₛₜ) auf dem vor Überschreiten des Scheitelpunkts der Straßenkuppe bei der Bergfahrt auf die Straßenkuppe eingestellten Wert der Getriebe-Gangstufe (Gang_{Steig}) gehalten wird.

2. Verfahren nach Anspruch 1,
**dadurch gekennzeichnet,**
daß zur Überprüfung der Kuppenfahrt zunächst festgestellt wird, ob das Fahrzeug sich auf einer Bergfahrt befindet und daß anschließend festgestellt wird, ob das Fahrzeug sich auf einer Talfahrt befindet.

3. Verfahren nach Anspruch 2,
**dadurch gekennzeichnet,**
daß die Bergfahrt des Fahrzeugs anhand folgender Bedingungen überprüft wird:
- das Fahrzeug befindet sich in Konstantfahrt,
- die vom Fahrer erzeugte Ist-Gaspedalstellung (Gasᵢₛₜ) ist höher als eine vom Regelsystem erzeugte und mit der vorgegebenen Zielgeschwindigkeit (v_{Ziel}) korrelierende Gaspedal-Ersatzgröße (Gas_{Ers}) und
- der Reglerausgang (SW) des Regelsystems überschreitet einen ersten Schwellenwert (SW_{Grenz,1}).

4. Verfahren nach Anspruch 2 oder 3,
**dadurch gekennzeichnet,**
daß die Talfahrt des Fahrzeugs anhand folgender Bedingung überprüft wird:
- der Reglerausgang (SW) des Regelsystems unterschreitet einen zweiten Schwellenwert (SW_{Grenz,2}).

5. Verfahren nach Anspruch 4,
**dadurch gekennzeichnet,**
daß der zweite Schwellenwert (SW_{Grenz,2}) kleiner ist als der erste Schwellenwert (SW_{Grenz,1}).

6. Verfahren nach einem der Ansprüche 1 bis 5,
**dadurch gekennzeichnet,**
daß die Festsetzung der aktuellen Getriebe-Gangstufe (Gangᵢₛₜ) nach Überfahren der Kuppe solange aufrecht erhalten wird, bis eine vorgegebene Haltezeit (t_{Halt}) verstrichen ist.

7. Verfahren nach einem der Ansprüche 1 bis 6,
**dadurch gekennzeichnet,**
daß für den Fall, daß das Fahrzeug sich im Schiebebetrieb mit ansteigender Fahrzeuggeschwindigkeit befindet, die Festsetzung der aktuellen Getriebe-Gangstufe (Gangᵢₛₜ) solange aufrecht erhalten wird, bis das Regelsystem eine sich von der aktuellen Getriebe-Gangstufe (Gangᵢₛₜ) unterscheidende Ganganforderung (Gang_{Ziel}) erzeugt.

8. Verfahren nach Anspruch 7,
**dadurch gekennzeichnet,**
daß der Schiebebetrieb vorliegt, wenn der Reglerausgang (SW) des Regelsystems den Wert Null einnimmt.

9. Vorrichtung zur Einstellung eines Automatikgetriebes in einem Fahrzeug mit Geschwindigkeits-Regelsystem, insbesondere Vorrichtung zur Durchführung des Verfahrens nach einem der Ansprüche 1 bis 8, wobei in dem Geschwindigkeits-Regelsystem, in welchem die dem vom Fahrer über die Ist-Gaspedalstellung (Gasᵢₛₜ) angeforderten Motormoment entsprechende Geschwindigkeit mit der vorgegebenen Zielgeschwindigkeit (v_{Ziel}) vergleichbar ist, unter Berücksichtigung von Fahrzeug-Zustandsgrößen und Fahrzeug-Betriebsgrößen Stellsignale zur Einlegung einer bestimmten Gangstufe erzeugbar und dem Automatikgetriebe zuführbar sind,
**dadurch gekennzeichnet,**
- daß zunächst eine Kuppenfahrt des Fahrzeugs feststellbar ist, wobei ein der Getriebe-Gangstufe (Gang_{Steig}), welche sich bei Bergfahrt über die Straßenkuppe einstellt, entsprechendes Signal speicherbar ist,
- daß nach dem Überfahren der Straßenkuppe das der aktuellen Getriebe-Gangstufe (Gangᵢₛₜ) entsprechende Signal auf das der Getriebe-Gangstufe (Gang_{Steig}) bei Bergfahrt über die Straßenkuppe entsprechende Signal gesetzt ist.
